# EUROPÄISCHE PATENTSCHRIFT

(11) **EP 1 256 513 B1**
(45) Veröffentlichungstag und Bekanntmachung des Hinweises auf die Patenterteilung: **15.03.2006**
(21) Anmeldenummer: 01890136.3
(22) Anmeldetag: 10.05.2001
(51) Int. Cl.: B62H 5/14

(54) **Nabensperrvorrichtung für einspurige Fahrzeuge**
Hub locking device for single-track vehicles
Verrouillage du moyeu pour véhicules à voie unique

(43) Veröffentlichungstag der Anmeldung: 13.11.2002
(73) Patentinhaber: Riedl, Erich, 1020 Wien (AT)
(72) Erfinder: Riedl, Erich, 1020 Wien (AT)
(74) Vertreter: Ellmeyer, Wolfgang

(56) Entgegenhaltungen:
- DE-A- 19 621 679
- DE-C- 490 863
- FR-A- 1 112 669
- US-A- 5 526 661

## Beschreibung

Die Erfindung betrifft ein einspuriges Fahrzeug mit Nabensperrvorrichtung, umfassend ein Gehäuse, in dem ein Schloß parallel zur Achse eines zu sperrenden Rades verschiebbar gelagert ist, welches Schloß eine Sperrstellung aufweist, in der es in eine drehbar auf der Achse des zu sperrenden Rades gelagerte Nabe eingreift, wobei das Gehäuse fest an einem Rahmen- oder Gabelteil des Fahrzeugs angeordnet ist und die Radachse oder eine Zugstange eines Schnellspanners aufnimmt, und wobei die Radnabe mit Ausnehmungen zum formschlüssigen Eingriff mit dem Schloß ausgebildet ist.

Bisher bekannte Diebstahlssicherungen für Fahrräder weisen alle gravierende Sicherheitsmängel auf, die oftmals ihre Funktion in Frage stellen. Versperrt man beispielsweise ein Fahrrad mit einem herkömmlichen Absperrschloß, das einen durch die Radspeichen und Rahmenteile hindurchführbaren Ketten- oder Seilabschnitt aufweist, so ist es möglich, den Ketten- oder Seilabschnitt mit einer Bolzenschere zu durchtrennen, worauf der Dieb mit dem Fahrrad wegfahren kann. In jedem Fall ist es ein Leichtes, einzelne Räder des Fahrrades zu entwenden. Wenn beispielsweise das Fahrrad am vorderen Rad mit einem Absperrschloß abgesichert ist, kann man den Schnellspanner des hinteren Rades aufschrauben und das Hinterrad entwenden. Ebenso kann man, wenn das Fahrrad am hinteren Rad mit einem Absperrschloß abgesichert ist, den Schnellspanner des Vorderrades aufschrauben und das vordere Rad entwenden.

Aus der DE 31 00 905 A1 ist eine Diebstahlssicherungsvorrichtung für Fahrräder bekannt, bei der ein verschiebbarer Riegel eines am Fahrzeug fest oder entnehmbar montierten Schlosses in Sperrstellung mit einem drehenden Teil eines gegen Drehung zu sperrenden Rades zusammenwirkt und bei der die Reaktionskraft für den Riegel von einem drehfesten Fahrzeugteil aufgebracht wird. Um das Unwirksammachen derartiger Sicherungsvorrichtungen wesentlich zu erschweren, ist der Riegel des an der Nabe des zu sperrenden Rades angeordneten Schlosses innerhalb der Nabe vorgesehen, wobei als drehfestes Fahrzeugteil ein dafür bestimmter Bereich des Achskörpers des Rades vorgesehen und zum formschlüssigen Eingriff mit dem Riegel ausgebildet ist.

Durch diese Diebstahlsicherungsvorrichtung wird zwar wirkungsvoll verhindert, daß ein Dieb Schloßtelte mittels eines Bolzenschneiders durchtrennt und daraufhin das Fahrrad in Betrieb nehmen kann, indem die wesentlichen Teile der Diebstahlssicherungsvorrichtung in das von außen unzugängliche Nabeninnere verlegt worden sind, es besteht jedoch selbst bei versperrtem Vorder- und Hinterrad keinerlei Schutz dagegen, daß durch einfaches Aufschrauben der Achsmuttem die Räder aus dem Fahrradrahmen genommen werden können. Insofern stellt diese Diebstahlsicherungsvorrichtung sogar gegenüber den althergebrachten Kettenschlössem einen Rückschritt dar.

Aus der DE 196 21 679 A1 ist eine Diebstahlssicherung für einspurige Fahrzeuge in Form einer abschließbaren Radnabe bekannt, wobei die Radnabe vier Nuten aufweist und auf einer Achse mit zwei eingefrästen Schlitzen sitzt, ein verlängertes Steckschloß am Ende einen beweglichen Teil mit einem Kniegelenk hat und dieser Teil, indem er bei eingestecktem Schloß durch einen Schlitz der Achse in eine Nut der Radnabe fällt, die Drehbewegung der Nabe blockiert. Weiters verhindert eine spezielle Sechskantmutter das Lösen der Achse.

In der FR 1 112 669 A (beinhaltet die Merkmale des Oberbegriffes des ersten Anspruchs) ist ein parallel zur Radachse verschiebbares Schloß an einer Radseite vorgesehen, das über Zapfen in Ausnehmungen der Radnabe eingreifen kann. Die Verriegelungsbewegung des Schlosses geschieht durch einen Bolzen, der in einem Hohlraum der Radachse an die dem Schloß gegenüberliegende Seite geführt ist.

Aufgabe der Erfindung ist es, die dem Stand der Technik anhaftenden Nachteile zu vermeiden, insbesondere das Aushängen der Räder durch Diebe zu verhindern.

Erfindungsgemäß wird dies dadurch erreicht, daß jeweils beidseitig am Rahmen-oder Gabelteil Nabensperrvorrichtungen vorgesehen sind, die das Rad dazwischen festhalten, und daß das Gehäuse eine Widerlagerfläche aufweist, weiche bei festgezogener Radachse oder festgezogenem Schnellspanner das Gehäuse jeweils in Reibungsschluß mit der Stimseite eines Kugellagers des Rades bringt

Somit ist es unmöglich, ein versperrtes Rad abzunehmen, selbst wenn die Achse aufgeschraubt bzw. der Schnellspanner geöffnet wird. Durch die Plazierung des Schlosses im Achsen- und Nabenbereich des jeweiligen Rades wird auch kein Zugang für einen Bolzenschneider geboten.

Um zu verhindern, daß die versperrte Nabenspenvorrrichtung durch kräftiges Ziehen an der Radfelge aufgebrochen werden kann, ist erfindungsgemäß weiters vorgesehen, das Schloß durch Führungen gegen Verdrehen zu sichern.

Um potentiellen Dieben auch nicht die Möglichkeit zu bieten zur Radachse Zugriff zu erlangen, ist es zweckmäßig, wenn das Gehäuse die Radachse bzw. die Zugstange des Schnellspanners vollständig umgibt.

Eine vorteilhafte Ausgestaltung der erfindungsgemäßen Nabensperrvorrichtung ist dadurch gekennzeichnet, daß am Gehäuse und an der Radnabe Markierungen angebracht sind, die bei gegenseitiger Ausrichtung die Ausrichtung von Schloß und Ausnehmungen in der Radnabe anzeigen.

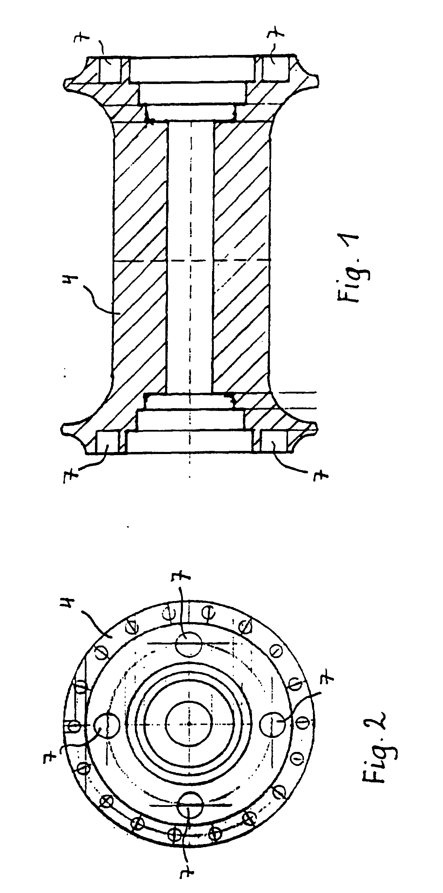

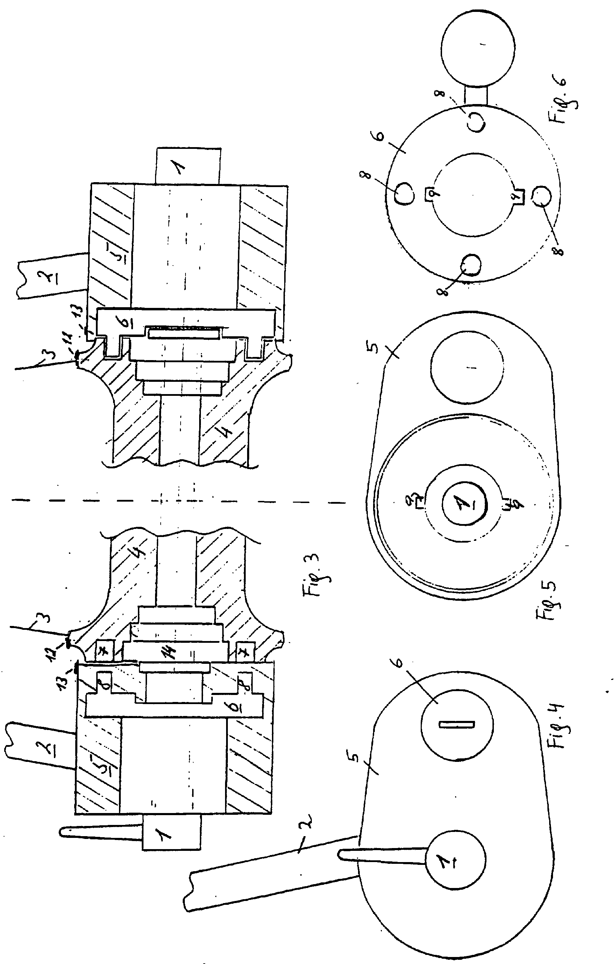

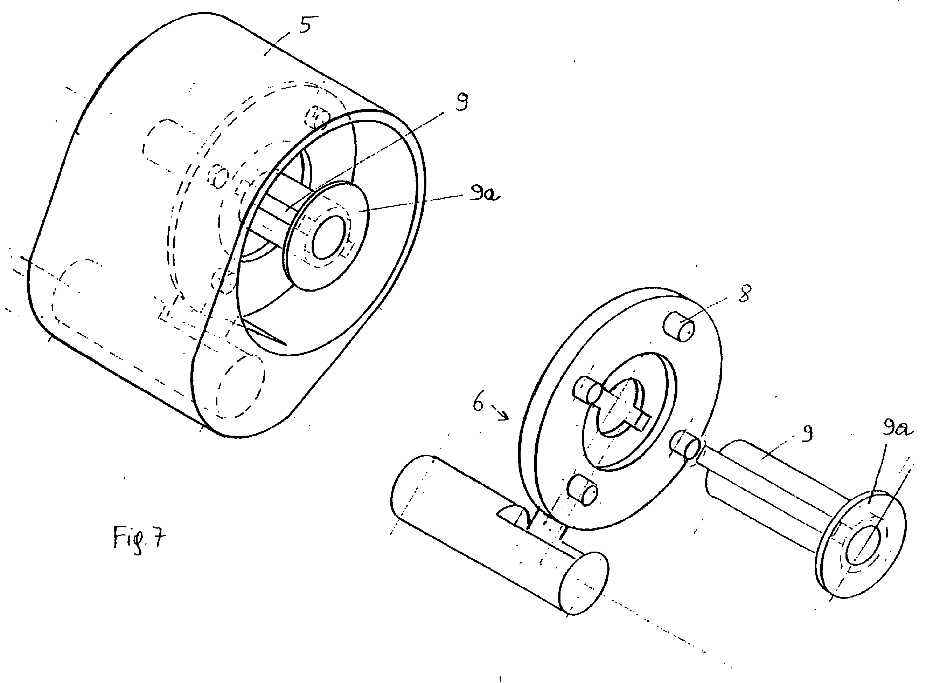

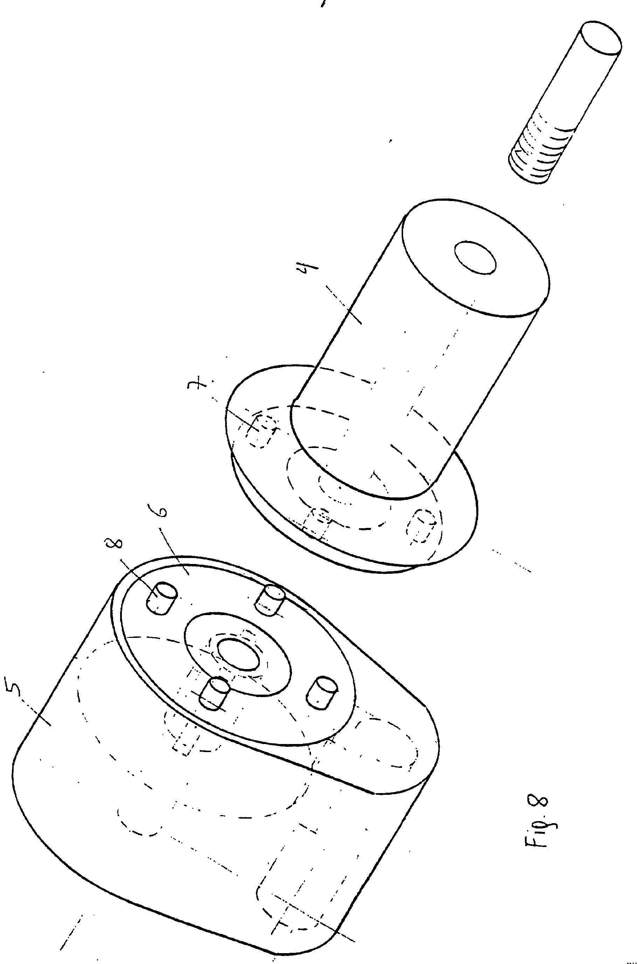

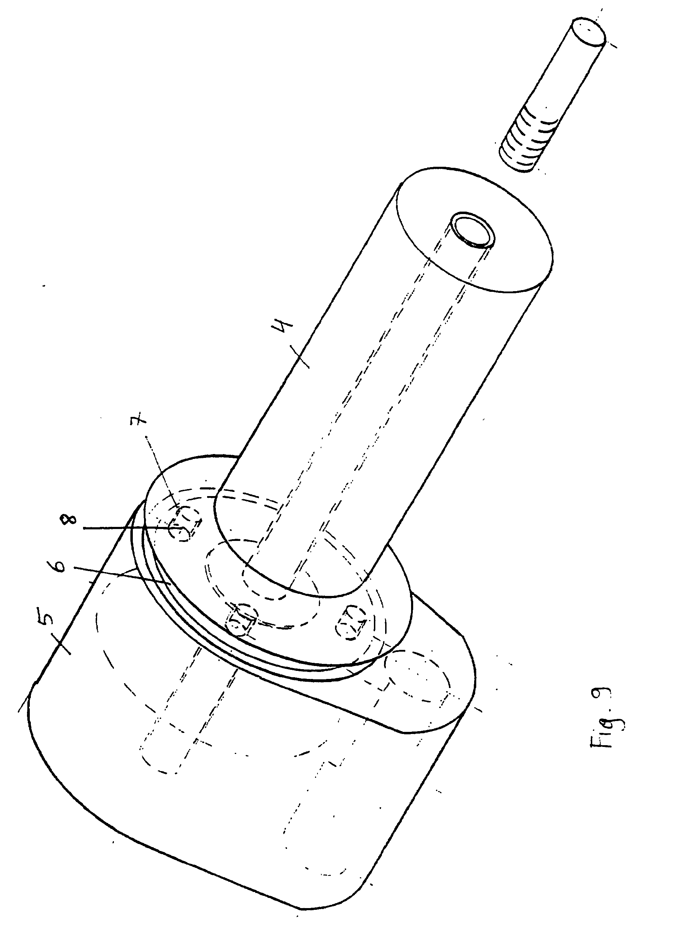

Die Erfindung wird nun unter Bezugnahme auf die Zeichnungsfiguren näher erläutert. Fig. 1 zeigt eine erfindungsgemäß ausgebildete Radnabe im Längsschnitt, Fig. 2 dieselbe Radnabe in Stimansicht, Fig.3 zeigt einen Längsschnitt durch die Radnabe und zwei efindungsgemäße Nabensperrvorrichtungen, die an den Gabelenden eines Fahrrades angebracht sind, die Figuren 4 bis 6 zeigen Detailansichten der Nabensperrvonichtungen von Fig.3, und die Figuren 7 bis 9 sind perspektivische Explosionsansichten der Nabensperrvorrichtungen von Fig. 3.

Gezeigt wird ein Ausführungsbeispiel, bei dem vier Nabensperrvorrichtungen, zwei für das hintere Rad und zwei für das vordere Rad, am Rahmen eines Fahrrades ein fester Bestandteil desselben sind. Die Schlösser der Nabensperrvorrichtungen wirken mit entsprechend ausgestalten Radnaben zusammen. Durch zwei verschiedene Schlüssel, einer für das hintere und einer für das vordere Rad, wird dieses System noch zusätzlich geschützt. Ein Dieb braucht also zwei Schlüssel, um wegfahren zu können. Selbst beim Versuch, die Schnellspanner zu entfernen, um das vordere oder das hintere Rad zu entwenden, können die Räder nicht ausgehängt werden, da jeweils beidseitig an der Gabel Nabensperrvorrichtungen vorgesehen sind, die das Rad dazwischen festhalten. Die Nabensperrvorrichtung bietet auch keinerlei Zugang für eine Bolzenschere. Beim Versuch, die Nabensperrvorrichtung mit einer Säge oder mit einer Trennscheibe zu entfernen, würde auch das Fahrrad unbrauchbar gemacht.

Das Gehäuse 5 ist fix mit der Gabel 2 verbunden bzw. ein fester Bestandteil davon. In das Gehäuse 5 ist das Schloß 6 integriert. Das Schloß 6 umfaßt vier verschiebbare Bolzen 8, die beim Auf- und Zusperren in das Gehäuseinnere bzw. aus dem Gehäuse 5 heraus verschoben werden, indem das verschiebbare Schloß 6, auf dem die Bolzen 8 starr angeordnet sind, entlang einer Führung 9 gleitet. Das dem Rad zugewandte Ende der Führung 9 schließt mit einem Flansch 9a ab, der als Widerlagerfläche für ein herkömmliches Kugellager 14 des Rades, genauer gesagt für eine Kontermutter des Kugellagers 14, dient. Die Nabe 4 des Rades weist vier Ausnehmungen 7 auf, in die beim Versperren die Bolzen 8 eingreifen. Am Gehäuse 5 ist eine Markierung 13 vorgesehen, ebenso sind an der Nabe 4 vier Markierungen 12 angeordnet, von denen eine vor dem Versperren des Schlosses mit der Markierung 13 in Übereinstimmung gebracht wird, um sicherzustellen, daß die Ausnehmungen 7 der Nabe 4 mit den Bolzen 8 ausgerichtet sind, sodaß sich das Schloß zusperren läßt, indem die Bolzen 8 in die Ausnehmungen 7 eingeführt werden, wodurch sich das Rad nicht mehr drehen kann. Um das Rad in der Gabel 2 zu montieren wird die Zugstange des Schnellspanners 1 durch das erste Gehäuse 5, dann durch die Nabe 4 und schließlich durch das zweite Gehäuse 5 hindurchgeführt und dann der Schnellspanner festgezogen. Im zugesperrten Zustand des Schlosses kann man zwar den Schnellspanner 1 bzw. dessen Zugstange aus der Radnabe 4 und den Gehäusen 5 herausnehmen, aber dennoch nicht das Rad aus der Fahrradgabel 2 bzw, dem Rahmen entfernen, da die aus dem Gehäuse 5 hervorstehenden vier Bolzen 8 nach wie vor in die Ausnehmungen 7 der Nabe 4 eingreifen und somit das Rad im Rahmen festhalten. Somit ist das Fahrrad zweimal abgesichert, man kann nicht wegfahren, man kann auch nicht das vordere oder das hintere Rad entwenden.

In der Zeichnung bezeichnet das Bezugszeichen 3 Speichen des Rades und das Bezugszeichen 14 ein herkömmliches Kugellager, das durch Kontermuttern auf der Radachse gesichert ist.

## Patentansprüche

1. Einspuriges Fahrzeug mit Nabenspenvorrichtung, umfassend ein Gehäuse (5), in dem ein Schloß (6) parallel zur Achse eines zu sperrenden Rades verschiebbar gelagert ist, welches Schloß (6) eine Sperrstellung aufweist, in der es in eine drehbar auf der Achse des zu sperrenden Rades gelagerte Nabe (4) eingreift, wobei das Gehäuse (5) fest an einem Rahmen- oder Gabelteil (2) des Fahrzeugs angeordnet ist und die Radachse oder eine Zugstange eines Schnellspanners (1) aufnimmt, und wobei die Radnabe (4) mit Ausnehmungen (7) zum formschlüssigen Eingriff mit dem Schloß (6) ausgebildet ist, **dadurch gekennzeichnet, daß** jeweils beidseitig am Rahmen- oder Gabelteil (2) Nabensperrvorrichtungen vorgesehen sind, die das Rad dazwischen festhalten, und daß das Gehäuse (5) eine Widerlagerfläche (9a) aufweist, welche bei festgezogener Radachse oder festgezogenem Schnellspanner (1) das Gehäuse (5) jeweils in Reibungsschluß mit der Stirnseite eines Kugellagers (14) des Rades bringt.

2. Nabensperrvorrichtung nach Anspruch 1, **dadurch gekennzeichnet, daß** das Schloß (6) Bolzen (8) zum Eingriff in die Ausnehmungen (7) der Radnabe (4) umfaßt.

3. Nabensperrvorrichtung nach Anspruch 1 oder 2, **dadurch gekennzeichnet, daß** das Schloß (6) durch Führungen (9) gegen Verdrehen gesichert ist.

4. Nabensperrvorrichtung nach einem der vorhergehenden Ansprüche, **dadurch gekennzeichnet, daß** das Gehäuse (5) die Radachse oder die Zugstange des Schnellspanners (1) radial vollständig umgibt

5. Nabensperrvorrichtung nach einem der vorhergehenden Ansprüche, **dadurch gekennzeichnet, daß** am Gehäuse (5) und an der Radnabe (4) Markierungen (13,12) angebracht sind, die bei gegenseitiger Ausrichtung die Ausrichtung von Schloß (6) und Ausnehmungen (7) in der Radnabe (4) anzeigen.

## Claims

1. A single track vehicle with hub locking device, comprising a housing (5) in which a lock (6) is supported slidably in parallel with respect to the axle of a wheel to be locked, which lock (6) has a locked position in which it engages with a hub (4) rotatably supported on the axle of the wheel to be locked, said housing (5) being fixedly arranged on a frame or fork part (2) of the vehicle and receiving said wheel hub or a tie rod of a quick release (1), and said wheel hub (4) being formed with recesses (7) for positive engagement with said lock (6), **characterised in that** hub locking devices are provided on said frame or fork part (2) at each of its two sides which hold the wheel sandwiched in between, and that said housing (5) has an abutment surface (9a) which brings the housing (5) into frictional contact with the face of a ball bearing (14) of the wheel when said wheel axle or said quick release (1) are tightened.

2. The hub locking device according to claim 1, **characterised in that** said lock (6) comprises bolts (8) for engaging with said recesses (7) in said wheel hub (4).

3. The hub locking device according to claim 1 or claim 2, **characterised in that** said lock (6) is safeguarded against twisting by guides (9).

4. The hub locking device according to any one of the preceding claims, **characterised in that** said housing (5) radially encloses said wheel hub or said tie rod of said quick release (1) fully.

5. The hub locking device according to any one of the preceding claims, **characterised in that** markings (13, 12) are provided on said housing (5) and on said wheel hub (4) which, when in alignment with each other, indicate the orientation of said lock (6) and said recesses (7) in said wheel hub (4).

## Revendications

1. Véhicule monotrace avec dispositif de verrouillage de moyeu, comprenant une enveloppe (5) dans laquelle une serrure (6) est logée de façon déplaçable parallèlement à l'essieu de la roue à verrouiller, cette serrure (6) ayant une position verrouillée dans laquelle elle est en prise avec un moyeu (4) logé de façon rotative sur l'essieu, l'enveloppe (5) étant arrangée de façon fixe a une partie du cadre ou de la fourche (2) du véhicule et recevant l'essieu de la roue ou une barre de traction d'un dispositif à serrage rapide (1), et le moyeu de roue (4) étant formé avec des creux (7) pour l'engagement positif avec la serrure (6), **caractérisé en ce que** des dispositifs de verrouillage de moyeu sont prévus bilatéralement à la partie du cadre ou de la fourche (2) qui retiennent la roue entre eux et que l'enveloppe (5) présente une surface d'aboutement (9a) qui apporte le contact de friction entre l'enveloppe (5) et la face d'un roulement à billes (14) de la roue quand l'essieu de la roue ou le dispositif à serrage rapide (1) est serré.

2. Verrouillage de moyeu selon la revendication 1, **caractérisé en ce que** la serrure (6) comprend des boulons (8) pour la mise en prise avec les creux (7) du moyeu de roue (4).

3. Verrouillage de moyeu selon la revendication 1 ou 2, **caractérisé en ce que** la serrure (6) est bloquée contre torsion par des guidages (9).

4. Verrouillage de moyeu selon l'une quelconque des revendications précédentes, **caractérisé en ce que** l'enveloppe (5) entoure complètement l'essieu de la roue ou la barre de traction du dispositif à serrage rapide (1) de manière radiale.

5. Verrouillage de moyeu selon l'une quelconque des revendications précédentes, **caractérisé en ce que** des marques (13, 12) sont appliquées à l'enveloppe (5) et au moyeu de roue (4) qui indiquent l'orientation de la serrure (6) et des creux (7) dans le moyeu de roue (4) quand elles sont en position d'alignement.
